# FASCICULE DE BREVET EUROPEEN

(11) **EP 4 172 488 B1**
(45) Date de publication et mention de la délivrance du brevet: **08.10.2025**
(21) Numéro de dépôt: 21735283.0
(22) Date de dépôt: 23.06.2021
(51) Int. Cl.: F03B 13/00

(54) **INSTALLATION HYDRAULIQUE POUR RÉSEAU D'EAU ET RÉSEAU D'EAU COMPORTANT UNE TELLE INSTALLATION**
HYDROELEKTRISCHE ANLAGE FÜR EIN WASSERNETZ UND WASSERNETZ MIT EINER SOLCHEN ANLAGE
HYDROELECTRIC FACILITY FOR A WATER NETWORK AND WATER NETWORK COMPRISING SUCH A FACILITY

(30) Priorité: 24.06.2020 FR 2006635
(43) Date de publication de la demande: 03.05.2023
(73) Titulaire: ECOLE NATIONALE DU GÉNIE DE L'EAU ET DE L'ENVIRONNEMENT DE STRASBOURG, 67070 Strasbourg (FR); Université de Strasbourg, 67081 Strasbourg cedex (FR); Centre National de la Recherche Scientifique, 75794 Paris Cedex 16 (FR)
(72) Inventeur: DELLINGER, Nicolas, 57412 Schmittviller (FR); DELLINGER, Guilhem, 57412 Schmittviller (FR); VAZQUEZ, José, 67500 Haguenau (FR)
(74) Mandataire: Cabinet Camus Lebkiri
(86) Numéro de dépôt international: PCT/EP2021/067208
(87) Numéro de publication internationale: WO 2021/260040

(56) Documents cités:
- WO-A1-2020/121141
- WO-A2-2010/117621
- CN-A- 105 443 298
- CN-A- 105 547 614
- CN-A- 111 006 730
- US-A1- 2013 292 945

## Description

### DOMAINE TECHNIQUE DE L'INVENTION

La présente invention concerne une installation hydraulique adaptée pour générer de l'énergie électrique à partir d'un flux d'eau circulant dans un réseau d'eau. Elle concerne également un réseau d'eau comportant une telle installation.

L'invention trouve des applications dans le domaine de la distribution d'eau et notamment de la distribution d'eau dans les réseaux d'eau potable des agglomérations, les réseaux d'irrigation ou les réseaux industriels.

### ARRIERE-PLAN TECHNOLOGIQUE DE L'INVENTION

De nos jours, les réseaux d'alimentation en eau se multiplient sur nos territoires, tant pour amener l'eau dans les habitations ou les industries que pour assurer l'irrigation des terres.

Les réseaux d'alimentation en eau, appelés aussi réseaux de distribution ou réseaux d'eau, sont soumis à des normes sanitaires et hydrauliques strictes. Ces dernières portent notamment sur la qualité physico-chimique de l'eau et sur les pressions aux différentes extrémités des réseaux.

Un réseau d'alimentation en eau peut s'étendre sur de très grandes surfaces, par exemple des surfaces de plusieurs kilomètres, dizaines de kilomètres ou même centaines de kilomètres carrés, en fonction de la taille de la zone à alimenter. Pour cela, un réseau d'alimentation en eau est constitué d'une pluralité de conduites en charge formant un réseau de canalisations où l'écoulement est entraîné soit de façon gravitaire, soit à l'aide de systèmes de pompage lorsque le relief est insuffisant pour permettre une gravitation. La complexité et la taille des zones à alimenter font que les réseaux d'alimentation en eau sont généralement de forme très complexe. En effet, ils peuvent être formés d'une multitude de mailles et de ramifications, voire même de sous-réseaux.

La forme complexe de ces réseaux d'alimentation en eau, les normes strictes à respecter et la complexité des phénomènes physiques qui régissent les écoulements en charge font que la gestion d'un réseau d'alimentation en eau est compliquée. Une bonne gestion du réseau d'alimentation en eau nécessite donc de nombreux points de mesures, intégrés au sein dudit réseau, pour permettre la réalisation de mesures principalement de type physico-chimique et débit-métrique. Les mesures physico-chimiques sont nécessaires afin d'assurer la potabilité de l'eau sur l'ensemble du système hydraulique. Les mesures débit-métriques sont indispensables à l'estimation et à l'optimisation du rendement hydraulique du réseau de distribution d'eau. Ces mesures débit-métriques permettent en outre, lorsqu'elles sont réalisées en un nombre de points de mesure élevé, de détecter et localiser rapidement de possibles fuites du réseau.

Pour réaliser ces mesures physico-chimiques et débit-métriques, il est connu d'utiliser des capteurs de mesures, implantés en divers points de mesure, dans le réseau de distribution. Ces capteurs peuvent, par exemple, être installés dans des regards de visite répartis sur la surface du réseau de distribution. Ces capteurs nécessitent d'être alimentés en électricité. De même, des débitmètres permettant de mesurer le débit de l'écoulement de l'eau dans la canalisation doivent être implantés dans le réseau d'alimentation en eau et alimentés électriquement. Une alimentation électrique est donc nécessaire pour, non seulement assurer le fonctionnement des divers capteurs de mesures, mais aussi pour permettre la transmission des données mesurées par les capteurs à un gestionnaire du réseau de distribution installé à distance. Bien que chaque capteur soit peu gourmand en électricité, l'ensemble des capteurs nécessite une puissance électrique non négligeable. En outre, le fait que les capteurs soient répartis sur toute la surface du réseau d'alimentation en eau nécessite de raccorder chaque point de mesure au réseau électrique, y compris les zones de mesure isolées, ce qui a pour effet d'être relativement onéreux.

Afin d'éviter les coûts de raccordement à un réseau électrique, des distributeurs d'eau ont envisagé d'utiliser l'énergie hydraulique disponible dans l'écoulement en charge afin d'alimenter en électricité les capteurs et/ou le système de transmission des données. Pour cela, ils ont proposé d'introduire, au sein des canalisations, des installations hydrauliques permettant de transformer l'énergie du flux d'eau en énergie électrique. Ces installations hydrauliques comportent généralement une turbine de petites dimensions - appelée pico-turbine - qui, sous l'effet de la pression d'eau, génère une énergie mécanique de rotation qui est ensuite transformée en énergie électrique par une génératrice. Plus précisément, la pico-turbine comporte un élément tournant placé dans le flux d'eau et mû en rotation par des forces de traînée ou de portance, cette rotation permettant de convertir l'énergie du flux d'eau en une énergie mécanique. L'axe de rotation de l'élément tournant peut être positionné parallèlement (pico-turbine de type axiale) ou perpendiculairement (pico-turbine de type radiale) à l'axe d'écoulement de l'eau.

La plupart de ces installations hydrauliques, comme celles décrites dans les documents US 4 740 711, US 2007/0145751 A1 et CA 2 926 053, sont logées, dans leur totalité, dans une canalisation du réseau d'alimentation en eau, ce qui a pour conséquence de générer des pertes de charge au sein du réseau d'alimentation en eau et donc de modifier le comportement hydraulique dudit réseau d'alimentation en eau. Pour limiter l'impact sur le comportement hydraulique du réseau d'alimentation en eau, certaines installations hydrauliques prévoient une canalisation de dérivation, appelée circuit by-pass, montée en parallèle d'une canalisation standard dudit réseau d'alimentation en eau. Or, un circuit by-pass est non seulement encombrant, mais également couteux à installer car il nécessite une modification structurelle de toute la zone du réseau de canalisations dans laquelle il est installé.

En outre, la pose de ces installations hydrauliques connues nécessite généralement une mise en œuvre complexe, avec découpe de la canalisation d'origine, mise en place d'un tronçon spécifique de canalisation intégrant l'installation hydraulique entre deux parties coupées de la canalisation d'origine et fixation des différents tronçons de canalisations entre eux de façon hermétique. Or, les différents tronçons de canalisations fixés entre eux devant être capables de supporter la pression du flux d'eau, cette fixation hermétique est délicate et donc couteuse tant en matériel qu'en temps d'ouvrage.

Dans certaines de ces installations hydrauliques, comme celles décrites dans les documents CA 2 926 053 et FR 3 010 150, lorsque la pico-turbine est du type axial, c'est-à-dire avec un axe de rotation parallèle à la direction du flux d'eau, la pico-turbine occupe la majeure partie de la section de passage du flux d'eau, ce qui provoque une baisse significative de la pression, même lorsque la pico-turbine est à l'arrêt. Les pico-turbines axiales nécessitent, en outre, des opérations d'installation complexes.

Dans certaines autres installations hydrauliques, comme celle décrite dans le document WO 2010/117621 A2, lorsque la pico-turbine est du type radial, c'est-à-dire avec un axe de rotation perpendiculaire à la direction du flux d'eau, la pico-turbine génère un encombrement d'autant plus important dans la canalisation que le nombre de pales est élevé et que les pales se terminent par un flasque, ce qui a un fort impact sur l'écoulement du flux d'eau et induit une perte de charge non négligeable.

Qu'elles soient de type radial ou axial, les pico-turbines des installations hydrauliques connues engendrent une modification du comportement hydraulique dans le réseau d'alimentation en eau avec notamment une perte de pression à la sortie de la pico-turbine. Cette conséquence est d'autant plus importante que le dénivelé du réseau d'alimentation en eau est faible, pouvant même conduire à une pression nulle en bout de réseau.

En outre, lorsque les dénivelés du réseau d'alimentation en eau sont faibles, par exemple dans des zones en plaine, il est courant d'observer des changements du sens d'écoulement de l'eau dans les canalisations. Ces changements de sens sont généralement induits par la demande en eau des consommateurs qui varie fortement au cours d'une journée, par exemple dans une zone où une usine a une grosse consommation en eau dans la journée alors que le soir l'usine est fermée et que le personnel de l'usine est à son domicile. Or, les pico-turbines des installations hydrauliques connues sont prévues pour fonctionner dans un seul sens d'écoulement de l'eau, ce qui a pour effet que non seulement l'énergie n'est plus récupérée, mais aussi que la pico-turbine, devenue inutile, génère une perte de charge dans le réseau de distribution. De plus, lorsque les changements de sens ne sont pas prévus, ils peuvent endommager l'électronique de puissance de la pico-turbine.

Il existe donc un réel besoin d'une installation hydraulique peu couteuse, facile à installer dans un réseau d'alimentation en eau existant et adaptée pour fonctionner dans les deux sens d'écoulement de l'eau, avec un faible impact sur le comportement hydraulique dudit réseau.

### RESUME DE L'INVENTION

Pour répondre aux divers problèmes évoqués ci-dessus, notamment de complexité de mise en place, d'encombrement et d'impact sur le comportement hydraulique du réseau de distribution, le demandeur propose une installation hydraulique dont seule la pico-turbine est installée dans la canalisation et qui comporte une pale de forme sensiblement annulaire ayant un faible encombrement et un faible impact sur le comportement hydraulique du réseau de distribution.

Selon un premier aspect, l'invention concerne une installation hydraulique destinée à générer de l'énergie électrique à partir d'un flux d'eau circulant dans un réseau d'eau, comportant :
- au moins une pico-turbine à flux transverse montée sur un arbre s'étendant perpendiculairement à une direction dudit flux d'eau, ladite pico-turbine comportant une pluralité de pales en arc de cercle s'inscrivant dans une ou plusieurs sections d'une sphère, installée dans le flux d'eau pour générer une énergie mécanique de rotation,
- au moins une unité génératrice, installée hors du flux d'eau et couplée à l'arbre de la pico-turbine pour transformer l'énergie mécanique de rotation en une énergie électrique,
- au moins une unité de mesure et de commande, installée hors du flux d'eau, connectée à l'unité génératrice, commandant la distribution de l'énergie électrique collectée et pilotant le point de fonctionnement de la pico-turbine en fonction du débit du flux d'eau.

Cette installation hydraulique est non seulement facile à mettre en place dans un réseau de distribution existant, mais elle permet aussi de générer de l'énergie électrique quel que soit le sens d'écoulement de l'eau, avec un faible impact sur le comportement hydraulique au sein dudit réseau.

L'homme du métier comprendra que le flux d'eau peut être un flux d'une eau pure ou non, chargée ou non chargée. En d'autres termes, on appelle « flux d'eau», un flux d'un liquide contenant de l'eau mélangé ou non à un ou plusieurs autres fluides et/ou chargé en particules ou matières solides.

Outre les caractéristiques qui viennent d'être évoquées dans le paragraphe précédent, l'installation hydraulique selon un aspect de l'invention peut présenter une ou plusieurs caractéristiques complémentaires parmi les suivantes, considérées individuellement ou selon toutes les combinaisons techniquement possibles :
- l'installation hydraulique comporte une unité de mesure déterminant indirectement une mesure du débit du flux d'eau.
- l'unité de mesure est adaptée pour déterminer le sens du flux d'eau.
- la pale annulaire a une section en forme de profil d'aile.
- la pale annulaire comporte deux pales en arc de cercle, de même rayon, montées bout à bout.
- l'arbre de la pico-turbine est monté en un unique point de la pale annulaire, à une jonction entre les extrémités des deux pales en arc de cercle.
- elle comporte un socle adaptatif, installé hors du flux d'eau et apte, d'une part, à maintenir l'arbre de la pico-turbine radial par rapport à la direction du flux d'eau et, d'autre part, à supporter l'unité de commande ainsi que l'unité génératrice.
- elle comporte au moins un capteur de mesure monté dans le socle adaptatif.
- l'unité génératrice comporte une génératrice à courant continu sans balai, connectée à un microcontrôleur.
- l'unité de commande comporte un module de télécommunication apte à échanger des données avec un système de traitement distant.
- elle comporte un dispositif de stockage de l'électricité produite.
- elle comporte un système à agrafe apte à maintenir le socle adaptatif autour d'une canalisation dans laquelle circule le flux d'eau.
- elle comporte un boîtier étanche dans lequel sont montés l'unité génératrice et l'unité de commande.

Un autre aspect de l'invention concerne un réseau d'en eau comportant une pluralité de canalisations reliées entre elles de sorte à former un réseau de canalisations dans lequel circule un flux d'eau, caractérisé en ce qu'il comporte au moins une installation hydraulique telle que définie ci-dessus, montée dans au moins une des canalisations du réseau de canalisation, la pico-turbine étant logée à l'intérieur de la canalisation et les unité génératrice et unité de mesure et de commande logées en extérieur de ladite canalisation.

Ce réseau d'eau peut présenter une ou plusieurs caractéristiques complémentaires parmi les suivantes, considérées individuellement ou selon toutes les combinaisons techniquement possibles :
- la canalisation comporte un orifice de passage, de dimensions adaptées aux dimensions extérieures de la pico-turbine de sorte à permettre le passage de la pale annulaire à l'intérieur de la canalisation, l'orifice de passage étant apte à être traversé par l'arbre de la pico-turbine.
- le socle adaptatif de l'installation hydraulique comporte une surface inférieure formant un bouchon autour de l'arbre de la pico-turbine, apte à fermer hermétiquement l'orifice de passage.
- le socle adaptatif de l'installation hydraulique comporte une surface inférieure de forme arrondie, adaptée pour épouser une paroi extérieure de la canalisation.
- la pale annulaire de la pico-turbine comporte un rayon extérieur supérieur à au moins 2/3 d'un rayon intérieur de la canalisation.
- l'installation hydraulique est installée dans un regard de visite dudit réseau, sur une canalisation existante.

Dans la suite de la description, les termes "inférieur" et "supérieur" sont utilisés en fonction de leur position par rapport à la circulation de l'eau, une partie supérieure d'un élément étant plus éloignée du flux d'eau qu'une partie inférieure.

### BREVE DESCRIPTION DES FIGURES

D'autres avantages et caractéristiques de l'invention apparaîtront à la lecture de la description qui suit, illustrée par les figures dans lesquelles :
La figure 1 représente une vue schématique de face d'un exemple de regard de visite d'un réseau d'eau comportant une installation hydraulique selon l'invention ;
La figure 2 représente une vue schématique éclatée d'une installation hydraulique selon l'invention en cours de montage dans un réseau d'eau existant ;
La figure 3 représente une vue schématique en coupe d'une installation hydraulique selon l'invention montée dans une canalisation d'un réseau d'eau ; et
La figure 4 représente une vue schématique, en coupe selon un plan médian horizontal de la canalisation, d'un exemple de profil de pale de la pico-turbine de l'installation hydraulique selon l'invention.

### DESCRIPTION DETAILLEE

Un exemple de réalisation d'une installation hydraulique facile à mettre en place et configurée pour générer de l'énergie électrique quel que soit le sens d'écoulement de l'eau, avec un faible impact sur le comportement hydraulique au sein du réseau d'eau, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

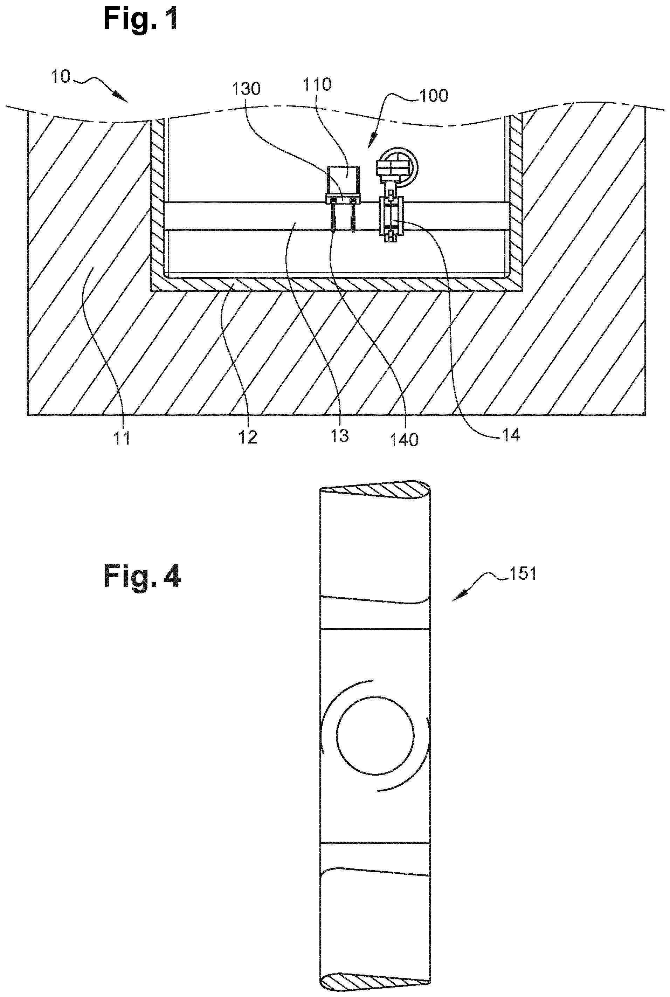

Un exemple d'une installation hydraulique selon l'invention, montée dans un regard de visite d'un réseau d'eau est représenté sur la figure 1. Cette figure 1 montre, en particulier, une portion de réseau d'eau 10 comportant un regard de visite 12 installé dans le sol 11 et traversé par une canalisation 13, appelée aussi conduite, à l'intérieur de laquelle s'écoule le flux d'eau. Dans cette portion du réseau d'eau 10, une vanne de sectionnement 14 est montée sur la canalisation 13. Il est entendu que toutes sortes de vannes et autres dispositifs nécessaires au fonctionnement du réseau d'eau peuvent être montés, à la place ou en plus de la vanne de sectionnement, sur ou à proximité de la canalisation 13, dans le regard de visite 12 ou à tout autre emplacement dans le réseau d'eau.

Selon l'exemple de la figure 1, l'installation hydraulique 100 de l'invention est montée dans la canalisation 13 traversant le regard de visite 12 du réseau d'eau 10. L'installation hydraulique 100 de l'invention peut bien entendu être montée dans tous réseaux en charge, comme les réseaux d'irrigation, les réseaux de distribution ou les réseaux industriels en eau propre ayant une faible charge de matière en suspension ou en eau chargée en particules ou matières solides. Comme on le comprendra à la lecture de ce qui suit, l'installation hydraulique 100 de l'invention peut être montée sur n'importe quelle partie de n'importe quelle canalisation du réseau en charge, appelé indifféremment réseau d'eau ou réseau de distribution ; elle peut notamment être montée dans un regard de visite 12 existant ou dans n'importe quel regard ou local du réseau, voire même directement dans le sol, dès lors qu'un accès à un tronçon de la canalisation est disponible.

Cette installation hydraulique 100 comporte une pico-turbine, non visible sur cette figure, logée à l'intérieur de la canalisation 13, un boîtier étanche 110 dans lequel sont logés les différents éléments mécaniques et électroniques assurant les mesures et les commandes de la pico-turbine, et un socle adaptatif 130 fixé sur la canalisation 13 au moyen d'un système à agrafe 140 et formant une interface entre la pico-turbine et le boîtier étanche 11.

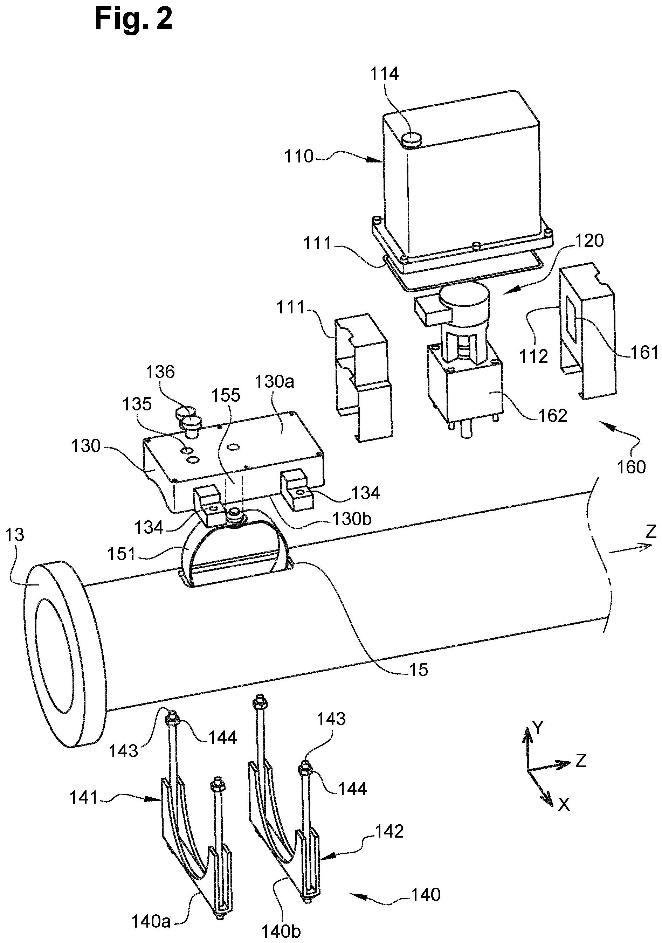

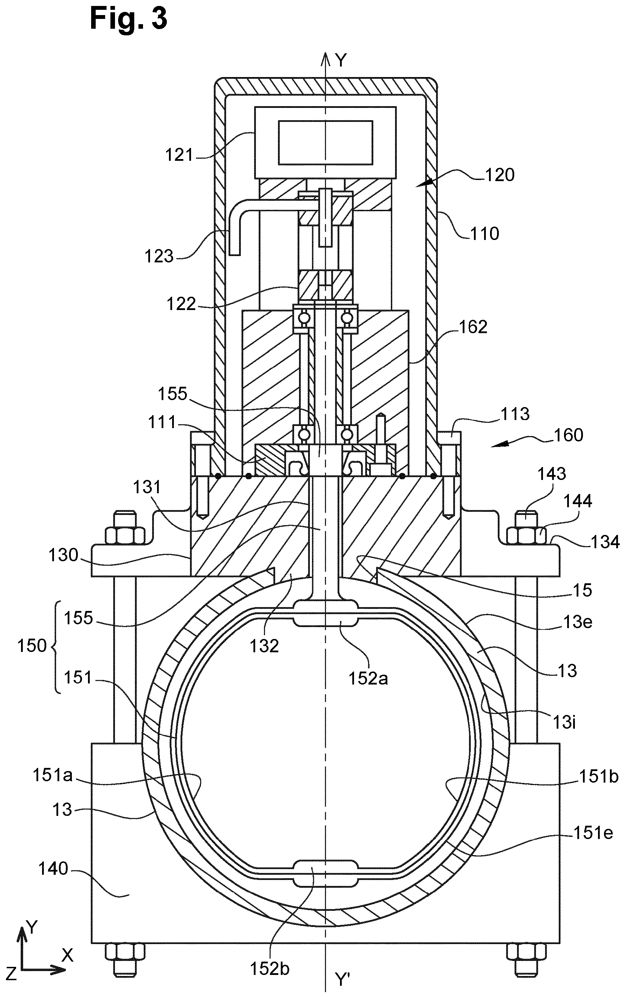

Une vue détaillée de l'installation hydraulique 100 est représentée, respectivement en cours de montage et montée sur une canalisation, en éclaté sur la figure 2 et en coupe sur la figure 3. Ces figures 2 et 3 montrent la canalisation 13 dans laquelle vient se loger la pico-turbine 150. Cette pico-turbine 150 comporte une pale de forme sensiblement annulaire 151, appelée plus simplement pale annulaire. Cette pale annulaire 151 est adaptée pour être installée à l'intérieur de la canalisation 13 et être mue par les forces de portance générées par le flux d'eau dans la canalisation. La pale annulaire 151 peut être fabriquée par un procédé additif, qui garantit une flexibilité maximale et une facilité d'industrialisation malgré des formes de pale pouvant être relativement complexes, ou par tout autre procédé conventionnel, comme l'usinage dans la masse ou le moulage.

La pale annulaire 151 peut être réalisée d'une seule pièce ; elle peut avantageusement être formée de deux pales en arc de cercle 151a, 151b, de même rayon, montées à la suite l'une de l'autre de sorte à former une sorte d'anneau. On considère que la pale 151 présente une forme d'anneau, même si elle présente des méplats 152, comme représenté sur la figure 3, dans la mesure où chacune des deux pales en arc de cercle 151a, 151b s'inscrit dans un arc de cercle à rayon constant, qui résulte du balayage d'un profil symétriquement à un plan médian. Ce plan passe par le centre géométrique de la pico-turbine 150 et est perpendiculaire à l'axe de rotation YY'. L'amplitude angulaire du balayage est, dans un exemple de configuration, de +/-60° et peut être sensiblement augmenté ou diminué. Les parties formant méplats 152a, 152b de la pale annulaire constituent un prolongement régulier des pales en arc de cercle 151a, 151b jusqu'au moyeu. Compte tenu de sa forme, la pale 151 ne présente aucune variation brusque de section, ni aucune partie centrale, ce qui permet d'éviter tout effet de trainée d'interférence, les trainées d'interférence étant connues pour engendrer des pertes au sein des pico-turbines classiques.

Dans la suite de la description, on parlera indifféremment de pale annulaire ou de pales en arc de cercle, étant entendu que deux pales en arc de cercle montées bout à bout fonctionnent de la même façon qu'une unique pale annulaire, cette/ces pale(s) étant montée(s) au niveau d'un méplat 152a sur un unique arbre 155, comme décrit plus en détail par la suite.

Dans certains modes de réalisation, la pale 151 est formée de plusieurs pales en arc de cercle. Comme expliqué précédemment, elle peut être formée de deux pales en arc de cercle montées l'une face à l'autre. En alternative, la pale 151 peut comporter au moins trois pales en arc de cercle, fixées les unes aux autres au niveau des méplats 152a, 152b et réparties suivant une forme globalement sphérique, le diamètre de cette forme sphérique correspondant au diamètre d'une pale annulaire. Dans cette alternative, la pluralité de pales en arc de cercle peut être répartie symétriquement ou asymétriquement, en fonction, par exemple, de la circulation du flux d'eau. L'homme du métier comprendra que l'expression « pale annulaire » ou « pale de forme sensiblement annulaire » intègre toutes les formes de pales s'inscrivant dans une ou plusieurs sections d'une sphère.

Dans des modes de réalisation préférés, et comme représenté sur la figure 4, la pale annulaire 151 comporte une section en forme de profil d'aile normalisé, à faible coefficient de trainé. Ce profil d'aile peut être un profil NACA de faible épaisseur, comme par exemple un profil NACA 15, c'est-à-dire avec une épaisseur égale à 15% de la longueur de la corde. On appelle « profil NACA » un profil aérodynamique, bien connu dans le domaine de l'aéronautique, développé par le Comité consultatif national pour l'aéronautique (National Advisory Committee for Aeronautics, en termes anglo-saxons) pour déterminer généralement un profil d'aile d'aéronef en fonction de paramètres de vol souhaités (portance, vitesse, trainée, etc.). Un profil NACA peut bien entendu être utilisé dans le domaine de l'écoulement d'eau pour minimiser la trainée générée par la pale annulaire de la pico-turbine dans le flux d'eau. Le profil NACA est un profil qui peut être symétrique, asymétrique, convexe, biconvexe, etc., et qui permet d'obtenir une forme présentant notamment une portance et une trainée prédéfinies. Il existe de nombreux profils NACA qui correspondent chacun à une forme différente répondant aux critères aérodynamiques. La forme d'un profil NACA est décrite à l'aide d'une série de chiffres (par exemple quatre, cinq ou six chiffres) placée après le mot « NACA ». Chaque chiffre correspond à la valeur d'un paramètre qui, saisi dans des équations spécifiques connues de l'homme du métier, permettent de générer précisément la section de l'aile d'aéronef et de calculer ses propriétés. Les valeurs des paramètres, données généralement en pourcentage, correspondent, par exemple, à la cambrure du profil en pourcentage de la longueur de la corde, à la position de la cambrure maximale en dixième de la corde et à l'épaisseur maximale du profil en pourcentage de la corde.

D'autres types de profils, symétriques ou non, peuvent être envisagés pour obtenir une faible trainée dans le flux d'eau, dans la canalisation 13, comme par exemple le profil Eppler. L'angle de calage du profil peut, par exemple, être constant et proche de 0, de sorte que la corde de la pale annulaire est sensiblement perpendiculaire au rayon de la pico-turbine. Dans l'exemple de la figure 3, la corde et l'angle de calage sont des grandeurs constantes, mais il peut être envisagé de faire varier au moins une de ces deux grandeurs, de sorte à optimiser le fonctionnement de la pico-turbine 150.

Selon l'invention, et comme représenté sur la figure 3, le rayon extérieur de la pale annulaire 151 est inférieur au rayon intérieur de la canalisation 13, mais est choisi de sorte que la face extérieure 151e de la pale annulaire 151 soit le plus proche possible de la paroi intérieure 13i de la canalisation 13 de sorte à générer un encombrement minimum au sein de ladite canalisation et, par conséquent, un impact très faible voire quasi nul sur le comportement hydraulique du réseau de distribution. Dans un mode de réalisation de l'invention, le rayon extérieur de la pale annulaire 151 est inférieur au rayon intérieur de la canalisation 13 retranché d'au moins une fois l'épaisseur du profil de la pale, ce qui permet d'éviter une quelconque interaction entre la pale annulaire 151 et la canalisation 13. De façon optimale, et afin de récupérer suffisamment d'énergie, le rayon extérieur de la pale annulaire 151 est supérieur à au moins 2/3 du rayon intérieur de la canalisation.

Pour pouvoir être installé dans la canalisation 13, un orifice de passage 15 est réalisé dans la paroi supérieure de la canalisation, par exemple par fraisage. Cet orifice de passage 15 a des dimensions adaptées à la circonférence de la pale annulaire 151. Comme représenté sur la figure 2, l'orifice de passage 15 est rectangulaire, centré sur l'axe central Z de la canalisation 13, d'une longueur parallèle audit axe Z et sensiblement supérieure au diamètre de la pale annulaire 151 et d'une largeur sensiblement supérieure à la largeur de la pale annulaire, la largeur étant la dimension suivant l'axe X du repère XYZ lorsque la pale annulaire est en cours d'installation comme dans l'exemple de la figure 2. La pale 151 de la pico-turbine 150 étant annulaire, un orifice de dimensions relativement réduites est suffisant pour permettre le passage de la pico-turbine dans la canalisation 13. Comme décrit par la suite, le fait que l'orifice de passage 15 soit de taille réduite (par rapport à un orifice devant laisser passer une turbine multi-pales classique) permet de le boucher facilement pour assurer l'étanchéité de la canalisation 13 et aussi de peu impacter la résistance mécanique de ladite canalisation.

Cet orifice permet d'insérer la turbine 3 dans la conduite. Il est creusé suivant une section rectangulaire, elle-même centré sur l'axe de la conduite et dont le grand côté est parallèle à l'axe de la conduite. Le grand côté de la section rectangulaire a une longueur sensiblement supérieure au diamètre extérieur de la turbine 3. Le petit côté de la section rectangulaire a une longueur sensiblement supérieure à la corde c du profil utilisé pour la génération des pales de la turbine. La corde du profil c correspond au segment de droite construit avec le bord d'attaque et de fuite du profil.

Selon l'invention, la pico-turbine 150 est une turbine de la famille des turbines à flux transverse, dont l'axe de rotation YY' est perpendiculaire à la direction Z du flux d'eau à l'intérieur de la canalisation 13. Ainsi, dans l'invention, l'arbre de rotation 155 supportant la pale annulaire 151 est monté perpendiculairement à la direction Z du flux d'eau, suivant l'axe de rotation YY'. Cet arbre de rotation 155 - appelé plus simplement arbre ou arbre de la pico-turbine - est fixé à la pale annulaire 151, par exemple à l'endroit du méplat supérieur 152a, et traverse la canalisation 13 par l'orifice de passage 15. Comme la pale annulaire 151 présente une circonférence adaptée pour que ladite pale annulaire soit proche de la paroi intérieure 13i de la canalisation 13, l'arbre 155 débouche dans la canalisation 13 dans une zone proche de ladite paroi intérieure 13i, ce qui permet d'éviter qu'il ne génère de quelconques tourbillons. L'arbre 155 n'a donc quasi pas d'impact sur le comportement hydraulique du réseau de distribution 10. De plus, puisque l'arbre 155 est fixé en un seul point de la pale annulaire, le guidage en rotation de la pico-turbine est en porte à faux, ce qui permet également de limiter l'interférence de la pico-turbine 150 avec l'écoulement de l'eau dans la canalisation 13, de maximiser le rendement de conversion et de réduire les coûts tout en facilitant l'implantation de la pico-turbine dans la canalisation.

Dans certains modes de réalisation, l'arbre de rotation 155 est complété par un arbre de rotation complémentaire s'étendant entre la pale 151 et le système à agrafe 140, dans la direction Y'. Cet arbre de rotation complémentaire peut, par exemple, être monté perpendiculairement à la direction Z du flux d'eau, suivant l'axe de rotation YY', et être fixé à la pale annulaire 151 en un endroit opposé à l'endroit de fixation de l'arbre de rotation 155 comme, par exemple, à l'endroit du méplat inférieur 152b. Ainsi, la pale annulaire 151 est maintenue à la fois par l'arbre de rotation 155 et par l'arbre complémentaire, sans toutefois qu'aucun arbre ne traverse la canalisation 13.

Ainsi, la pico-turbine 150 telle qu'elle vient d'être décrite présente l'avantage d'être insensible au sens du flux d'eau. En effet, que le flux d'eau s'écoule dans la direction Z ou dans la direction -Z, la pale annulaire 151 entraînée par l'arbre 155 peut tourner indifféremment dans un sens ou dans l'autre, sans impact sur l'écoulement. De plus, la pico-turbine 150 a la capacité de fonctionner sur une large plage de vitesses d'écoulement, c'est-à-dire quel que soit la zone où est implanté le réseau d'eau 10 et quel que soit le moment de la journée, et cela même à de faibles vitesses de l'ordre de 1m/s. En outre, et contrairement aux configurations multi-pales classiques, la pico-turbine 150 est dite « effaçable », c'est-à-dire avec peu ou pas d'effet sur le comportement hydraulique dans la canalisation, lorsque le diamètre de la pale annulaire 151 est parallèle au plan XY perpendiculaire à l'axe Z de l'écoulement. En effet, dans cette configuration où la largeur de la pale annulaire est parallèle à la paroi de la canalisation, la surface occupée par la pico-turbine 150 est inférieure à 10% à la section de la canalisation et les pertes de charge engendrées sont inférieures à 2% de la charge totale mesurée au niveau de l'implantation, les pertes de charges étant d'autant plus faibles que la vitesse d'écoulement est faible.

L'arbre 155, entraîné en rotation par la pale annulaire 151, entraîne à son tour l'unité génératrice 120 qui transforme, en énergie électrique, l'énergie mécanique de rotation générée par la pale annulaire sous l'effet du flux d'eau. L'unité génératrice 120 est installée hors de la canalisation 13 et donc en dehors du flux d'eau. L'unité génératrice 120 est connectée à une unité de commande 160, elle aussi installée hors de la canalisation 13 et donc en dehors du flux d'eau. Dans certains modes de réalisation, l'unité de commande assure, d'une part, la commande de la distribution de l'énergie électrique collectée et, d'autre part, la rotation de la pico-turbine en fonction des caractéristiques du flux d'eau. Dans d'autres mode de réalisation, l'unité de commande peut être couplée à une unité de mesure qui assure une mesure, par exemple indirecte, du débit d'eau et/ou une mesure du sens du flux d'eau. L'unité de mesure peut, par exemple, être intégrée dans l'unité de commande. Lorsqu'une unité de mesure est couplée ou intégrée à l'unité de commande, l'unité de commande est alors appelée « unité de mesure et de commande ». Dans la suite de la description, on utilisera le terme d'unité de mesure et de commande, étant entendu que, lorsque les mesures du débit d'eau et/ou du sens du flux d'eau ne sont pas utiles ou réalisées par des dispositifs externes tels que des capteurs, une simple unité de commande peut être utilisée.

L'unité de mesure et de commande 160 peut être logée dans un boîtier 162 muni d'un système d'étanchéité 111, empêchant toute remontée de fluide de la conduite en charge 113. L'unité de mesure et de commande 160 comporte un système de roulement standard, comme par exemple des roulements à billes ou à rouleaux, qui présentent l'avantage à la fois d'être relativement peu couteux et de limiter les pertes énergétiques par frottement. Dans un exemple, le système de roulement comporte des roulements à billes rigides, comportant une seule rangée de billes. D'autres types de roulement peuvent bien entendu être envisagés en fonction des efforts à transmettre.

L'unité de mesure et de commande 160 comporte, de plus, une unité de traitements, par exemple sous la forme d'un microcontrôleur 161, permettant de piloter la position de la pale annulaire 151 dans la canalisation 13 via l'arbre 155. L'unité de mesure et de commande 160 peut comporter en outre un variateur, associé à l'unité génératrice 120 et piloté par le microcontrôleur 161. Ce variateur, tout comme le microcontrôleur 161, peuvent être des composants standards, de tailles relativement réduites, logés par exemple dans un rack 112. Le rack 112 peut également d'accueillir un module de télécommunication, par exemple à ondes radio ou utilisant des protocoles de communication standards de type Gsm, Wifi ou Bluetooth, apte à échanger des données avec un système de traitement distant.

L'unité de mesure et de commande 160 est prévue pour commander la distribution de l'énergie électrique collectée par l'unité génératrice 120 et pour assurer le pilotage de la pico-turbine 150 par recherche des points de fonctionnement optimaux en fonction des débits de l'eau dans la canalisation 13. Des valeurs du débit de l'eau peuvent, en effet, être obtenues par calcul à partir des caractéristiques de fonctionnement de la pico-turbine dans le plan couple-vitesse. En effet, à partir de la vitesse de l'écoulement mesurée dans la conduite, l'unité de mesure et de commande 160 peut en déduire le débit qui transite dans la canalisation 13. L'installation hydraulique 100 permet donc de connaitre les débits d'eau dans une gamme de vitesse comprise entre 0,5 m/s et 1,5 m/s, sans nécessiter l'utilisation d'un débitmètre, non seulement onéreux en termes de coût d'achat mais aussi énergivore en termes de consommation électrique. Une mesure de débit complémentaire peut toutefois être assurée par un capteur de mesure annexe, intégré ou non dans l'installation hydraulique ; dans le cas d'une mesure complémentaire de débit, le capteur de mesure peut être par exemple l'un des capteurs de mesure montés dans le socle adaptatif 130, comme décrit par la suite.

Le calcul du débit d'eau dans la canalisation peut notamment permettre d'utiliser des brise-charges permettant de limiter la pression hydraulique, par exemple dans des réseaux d'alimentation en eau présentant de forts dénivelés. Lorsque la détermination du débit constate un surplus de pression, celui-ci peut soit être converti en électricité à l'aide de l'unité génératrice, soit directement dissipé en chaleur par agitation de l'eau au moyen de la pico-turbine fonctionnant à l'emballement, soit les deux en même temps.

Lorsque le surplus de pression est converti en électricité, cette électricité peut être stockée dans des dispositifs de stockage d'énergie électrique, ce qui permet de réguler la charge hydraulique.

En effet, selon certains modes de réalisation, l'installation hydraulique 100 peut comporter un ou plusieurs dispositifs de stockage d'énergie, comme par exemple des accumulateurs, permettant de stocker l'énergie électrique produite par l'unité génératrice 120 afin d'assurer la continuité du fonctionnement de l'unité de mesure et de contrôle 160 de la pico-turbine ainsi que la continuité des mesures par les capteurs de mesure, malgré la variabilité du flux dans la canalisation 13 (la variabilité étant due notamment aux différences de consommation entre les différents moments de la journée). Ces dispositifs de stockage d'électricité peuvent, par exemple être logés dans des racks 111 installés dans le boîtier étanche 110 décrits plus précisément par la suite. Ils sont choisis, de préférence, de sorte à assurer au moins une autonomie électrique de l'unité de mesure et de commande de 12 heures.

L'unité génératrice 120 comporte un moteur ou une génératrice 121 capable de transformer en électricité l'énergie mécanique de rotation de la pico-turbine 150. Afin de limiter les coûts de fabrication de l'installation hydraulique 100, l'unité génératrice 120 est de préférence choisie parmi des composants standards. Elle peut, par exemple, être une génératrice 120 à courant continu sans balais et à commutation électronique, une telle génératrice ayant le double avantage de permettre de réduire la maintenance et d'améliorer le rendement de fonctionnement par rapport à une machine à courant continu à balais. Une génératrice 121 à courant continu sans balais présente également l'avantage de fonctionner efficacement sur une large plage du plan couple - vitesse de rotation, pour des puissances modestes inférieures à environ 1kW, cela étant d'autant plus important lorsque les débits dans la canalisation sont variables.

Selon certains modes de réalisation, l'entraînement de l'unité génératrice 120 se fait directement par l'arbre 155 et par l'intermédiaire d'un joint d'accouplement 122. Le fait d'assembler directement l'arbre 155 avec l'unité génératrice 120 a l'avantage d'assurer la montabilité de l'ensemble tout en réduisant les contraintes de fabrication et donc les coûts. Le fait d'assembler directement l'arbre 155 avec l'unité génératrice 120 permet, en évitant un étage de multiplication ou de réduction de vitesse, de diminuer les pertes énergétiques dans le processus de conversion. Cela permet, en outre, d'améliorer l'estimation du couple fourni par la pico-turbine 150 et par conséquent d'augmenter la précision de mesure du débit, comme expliqué par la suite.

Bien entendu, il peut tout de même être envisagé que l'unité génératrice 120 comporte un multiplicateur de vitesse, celui-ci étant alors être intégré sur la ligne d'arbre 155. Un tel multiplicateur de vitesse présente l'avantage de réduire le couple mécanique au niveau de la génératrice, ce qui permet de réduire la taille de ladite génératrice. Dans cette variante, le multiplicateur de vitesse associé à la génératrice 121 est choisi parmi des composants standards et piloté par un microcontrôleur générique de sorte à limiter les coûts de production de l'installation hydraulique 100.

L'unité génératrice est logée dans le boîtier étanche 110 conçu pour éviter toute remontée humide de la pico-turbine vers l'unité génératrice et tous les autres composants électroniques et/ou mécaniques nécessaires au fonctionnement de l'installation hydraulique 100. Plus précisément, le boîtier étanche 110 délimite une enceinte étanche permettant de garantir la fiabilité de l'installation hydraulique 100 en assurant la protection de l'unité de mesure et de commande 160, des racks 111 et 112, de l'unité génératrice 120 et, plus généralement, de tous les éléments électroniques et électromécaniques de l'installation hydraulique. Pour cela, le boîtier étanche 110 comporte un système d'étanchéité 111 comportant, par exemple, un joint à lèvre standard positionné autour de l'arbre 155 et apte à supporter une pression d'eau adaptée à la pression du flux d'eau circulant dans la canalisation 13. Ce joint à lèvre est de préférence fabriqué dans un matériau tel que le coefficient de frottement avec l'arbre 155 est minimisé, de sorte à ne pas affecter la potabilité de l'eau. Ce joint à lèvre peut, par exemple être fabriqué en Polytétrafluoroéthylène (ou PTFE). Dans une variante, lorsque la pression de l'eau circulant dans la canalisation est plus élevée que la pression maximale supportée par le joint à lèvre, plusieurs joints à lèvres, identiques ou différents, peuvent être montés en série les uns sur les autres.

Le boîtier étanche 110 peut être amovible, par exemple fixé par un système de vis 113 au socle adaptatif 130 décrit par la suite, de sorte à permettre une éventuelle intervention humaine sur les composants logés à l'intérieur dudit boîtier étanche.

Dans une variante, le boîtier étanche 110 peut comporter une ou plusieurs goulottes 114 permet le passage d'un câblage électrique, comme par exemple des câbles électriques permettant la distribution d'énergie électrique à des composants extérieurs, comme les capteurs de mesure, et/ou un canal de communication, par exemple full-duplex, permettant le transfert de données vers un support physique externe ou un dispositif de communication.

Dans un mode de réalisation, comme celui représenté en figure 3, l'unité génératrice 120 comporte une poignée 123 ou pige de blocage de l'arbre 155, assurant la fiabilité de l'installation hydraulique en cas d'avarie. En effet, en cas d'avarie de l'installation hydraulique et notamment du système de pilotage de la pico-turbine, il est alors possible de bloquer, au moyen de la poignée 123, la pale annulaire 151 dans une position telle que l'interférence entre la pico-turbine et l'écoulement d'eau dans la canalisation 13 soit minimisée. Autrement dit, en cas d'avarie du système de contrôle de la pico-turbine, la poignée 123 permet de positionner manuellement la pale annulaire 151 dans une position dite « effacée » où ladite pale annulaire 151 est parallèle à la canalisation 13 de sorte à ne pas perturber l'écoulement de l'eau en attendant que le système de pilotage soit réparé. Dans ce mode de réalisation, la poignée 123 peut être logée à l'intérieur du boîtier étanche 110, comme dans l'exemple de la figure 3, ou bien traverser ledit boîtier étanche via un orifice muni d'un joint d'étanchéité.

Comme représenté sur les figures 2 et 3, le boîtier étanche 110 est monté sur le socle adaptatif 130, installé autour de l'arbre 155, hors de la canalisation 13. Ce socle adaptatif 130 est une pièce assurant l'interface mécanique entre la canalisation 13 et le boîtier étanche 110. Pour cela, le socle adaptatif 130 comporte une surface supérieure 130a plane et une surface inférieure 130b concave, la surface supérieure 130a étant apte à supporter le boîtier étanche 110 avec les éléments logés en son sein, la surface inférieure 130b étant conçue pour épouser la forme extérieure de la conduite 13 et permettre le passage de l'arbre 155. Le socle adaptatif 130 peut, selon une première variante, être une pièce pleine, par exemple réalisée en inox ou dans un plastique compatible avec la potabilité de l'eau, dont la surface supérieure 130a est sensiblement plane et dont la surface inférieure 130b présente une courbure complémentaire de la circonférence de la paroi extérieure 13e de la canalisation 13 et un orifice 131 adapté pour être traversé par l'arbre 155. Le socle adaptatif 130 peut, selon une deuxième variante, être une pièce creuse dont la paroi comporte une surface supérieure 130a plane et une surface inférieure 130b présentant une courbure complémentaire de la circonférence de la paroi extérieure 13e de la canalisation 13. La surface inférieure 130b et la surface supérieure comportent alors chacune un orifice 131 adapté pour laisser passer l'arbre 155. Dans cette deuxième variante, le socle adaptatif 130 peut accueillir en son sein un ou plusieurs capteurs de mesure, non représentés sur les figures. Ces capteurs de mesure peuvent être par exemple des capteurs de détection de fuite, des capteurs de pression, des capteurs de débit, des capteurs d'analyse physico-chimique, etc.

Quelle que soit la variante, le socle adaptatif 130 est réalisé en fonction principalement de trois paramètres caractérisant la canalisation 13 : son diamètre extérieur 13e, la rugosité de sa paroi extérieure 13e et le type de matériau. Ce socle adaptatif 130 permet l'implantation directe de la pico-turbine 150 sur une canalisation existante, uniquement après réalisation d'un orifice de passage 15 dans la paroi de la canalisation. Bien entendu, l'installation hydraulique 100 peut également être montée sur une canalisation neuve, avant montage de la canalisation dans le réseau d'eau 10 ou après montage de ladite canalisation dans le réseau d'eau 10. Pour assurer un montage hermétique de l'installation hydraulique 100 sur la canalisation (neuve ou existante), le socle adaptatif 130 comporte, sur sa surface inférieure 130b, un bouchon 132 assurant une fermeture hermétique de l'orifice de passage 15 de la canalisation 13. Ce bouchon 132 peut être directement intégré dans la surface inférieure 130b du socle adaptatif ou rapporté et fixé sur ladite surface inférieure. Ce bouchon 132 peut être formé par la face inférieure concave 130b du socle adaptatif 130, affleurante à la paroi intérieure 13i de la conduite et adaptée pour remplacer la partie extrudée de l'orifice de passage 15 de la conduite. Ce bouchon 132 permet d'éviter de perturber l'écoulement de l'eau dans la canalisation, en évitant la création de pertes de charge singulières, néfastes au fonctionnement du réseau d'eau.

Selon une variante, le socle adaptatif 130 peut comporter des orifices supérieurs 135 conçus pour permettre le passage des capteurs de mesure lorsque ceux-ci sont logés dans ledit socle adaptatif. Ces orifices 135 peuvent être fermés par des capuchons 136 lorsque le socle adaptatif ne contient pas ou peu de capteurs de mesure.

Pour assurer le maintien du socle adaptatif 130 sur la canalisation 13, l'installation hydraulique comporte un système à agrafe 140 positionné partiellement autour de la canalisation 13 et fixé sur ledit socle adaptatif. La partie centrale du système à agrafe 140 épouse de préférence la conduite 13 jusqu'à son plan médiant, ce qui a l'avantage de répartir les contraintes mécaniques appliquées sur ladite conduite. Le système à agrafe 140 peut comporter une unique agrafe épousant la forme de la canalisation 13 et présentant une relativement large surface de contact avec ladite canalisation, par exemple une surface sensiblement égale à la longueur du socle adaptatif 130. Le système à agrafe 140 peut également comporter, comme montré sur la figure 2, deux agrafes 141 et 142 qui épousent chacune la forme de la conduite 13. Dans un mode de réalisation préféré, les extrémités supérieures 143 des deux agrafes 141, 142 se terminent par un filetage sur lequel un écrou 144 peut être vissé, ces extrémités supérieures 143 étant conçues pour traverser chacune un orifice latéral 134 réalisé dans le socle adaptatif 130. Un serrage de l'écrou 144, par exemple à la clé dynamométrique, permet d'ajuster les efforts dans les agrafes 141, 142 en fonction des caractéristiques mécaniques de la conduite 13, ce serrage devant être suffisant pour assurer l'étanchéité de l'ensemble, sans détériorer la conduite. Dans un mode de réalisation, les deux agrafes 141, 142 peuvent présenter une forme en U dont l'extrémité libre de chacune des jambes comporte un filetage. Dans un autre mode de réalisation, comme celui représenté sur la figure 2, chacune des agrafes 141, 142 comporte une base 140a, dans laquelle sont réalisés deux perçages permettant le passage de deux tirants 140b placés de part et d'autre de la conduite 13. Dans encore un autre mode de réalisation, les deux agrafes 141, 142 sont absentes et le socle adaptatif 130 est fixé directement par soudage sur la conduite 13.

Dans les modes de réalisation qui viennent d'être décrit, l'installation hydraulique 100 comporte une pico-turbine 150, une unité génératrice 120 et une unité de commande 160 ou unité de mesure et de commande. Dans d'autres modes de réalisation, une installation hydraulique 100 peut comporter plusieurs pico-turbines, par exemple montées en série dans la conduite, et/ou plusieurs unités génératrices et/ou plusieurs unités de commande, différentes configurations de couplage entre les pico-turbines, les unités génératrices et les unités de commande étant réalisables. Des exemples de configurations de couplage peuvent être : plusieurs pico-turbines couplées avec une seule unité génératrice et une seule unité de commande ou bien plusieurs pico-turbines et plusieurs unités génératrices couplées avec une seule unité de commande ou encore plusieurs unités de commandes et plusieurs unités génératrices couplées avec une seule pico-turbine, etc. Dans d'autres modes de réalisation, par exemple lorsque la charge hydraulique est importante, plusieurs installations hydrauliques 100 peuvent être montées en série et couplées, par exemple, par un dispositif de couplage mécanique ou une unité de synchronisation.

## Revendications

1. Installation hydraulique (100) destinée à générer de l'énergie électrique à partir d'un flux d'eau circulant dans un réseau d'eau (10), comportant :
- au moins une pico-turbine (150) à flux transverse montée sur un arbre (155) s'étendant perpendiculairement à une direction dudit flux d'eau, ladite pico-turbine comportant une pluralité de pales (151) en arc de cercle s'inscrivant dans une ou plusieurs sections d'une sphère, installée dans le flux d'eau pour générer une énergie mécanique de rotation,
- au moins une unité génératrice (120), installée hors du flux d'eau et couplée à l'arbre (155) de la pico-turbine pour transformer l'énergie mécanique de rotation en une énergie électrique,
**caractérisée en ce que** l'installation hydraulique comporte en outre
- au moins une unité de mesure et de commande (160), installée hors du flux d'eau, connectée à l'unité génératrice (120), commandant la distribution de l'énergie électrique collectée et pilotant le point de fonctionnement de la pico-turbine (150) en fonction du débit du flux d'eau.

2. Installation hydraulique selon la revendication 1, **caractérisée en ce qu'**elle comporte une unité de mesure déterminant indirectement une mesure du débit du flux d'eau.

3. Installation hydraulique selon l'une quelconque des revendications 1 à 2, **caractérisée en ce que** la pale de forme sensiblement annulaire (151) a une section en forme de profil d'aile.

4. Installation hydraulique selon l'une quelconque des revendications 1 à 3, **caractérisée en ce que** la pale de forme sensiblement annulaire (151) comporte deux pales en arc de cercle (151a, 151b), de même rayon, montées bout à bout.

5. Installation hydraulique selon la revendication 4, **caractérisée en ce que** l'arbre (155) de la pico-turbine est monté en un unique point de la pale annulaire (151), à une jonction entre les extrémités des deux pales en arc de cercle (151a, 151b).

6. Installation hydraulique selon l'une quelconque des revendications 1 à 5, **caractérisée en ce qu'**elle comporte un socle adaptatif (130), installé hors du flux d'eau et apte, d'une part, à maintenir l'arbre (155) de la pico-turbine radial par rapport à la direction du flux d'eau et, d'autre part, à supporter l'unité de mesure et de commande (160) ainsi que l'unité génératrice (120).

7. Installation hydraulique selon la revendication 6, **caractérisée en ce qu'**elle comporte au moins un capteur de mesure monté dans le socle adaptatif (130).

8. Installation hydraulique selon l'une quelconque des revendications 1 à 7, **caractérisée en ce que** l'unité génératrice (120) comporte une génératrice à courant continu sans balai, connectée à un microcontrôleur.

9. Installation hydraulique selon l'une quelconque des revendications 1 à 8, **caractérisée en ce que** l'unité de commande (160) comporte un module de télécommunication apte à échanger des données avec un système de traitement distant.

10. Installation hydraulique selon l'une quelconque des revendications 6 à 9, **caractérisée en ce qu'**elle comporte un dispositif de stockage de l'électricité produite.

11. Installation hydraulique selon l'une quelconque des revendications 1 à 10, **caractérisée en ce qu'**elle comporte un boîtier étanche (110) dans lequel sont logés au moins l'unité génératrice (120) et l'unité de commande (160).

12. Réseau d'eau (10) comportant une pluralité de canalisations (13) reliées entre elles de sorte à former un réseau de canalisations dans lequel circule un flux d'eau,
**caractérisé en ce qu'**il comporte au moins une installation hydraulique (100) selon l'une quelconque des revendications 1 à 11, montée dans au moins une des canalisations du réseau de canalisation, la pico-turbine (150) étant logée à l'intérieur de la canalisation (13) et les unité génératrice (120) et unité de commande (160) logées en extérieur de ladite canalisation.

13. Réseau d'eau selon la revendication 12, **caractérisé en ce que** la canalisation (13) comporte un orifice de passage (15), de dimensions adaptées aux dimensions extérieures de la pico-turbine de sorte à permettre le passage de la pale de forme sensiblement annulaire à l'intérieur de la canalisation, l'orifice de passage étant apte à être traversé par l'arbre (155) de la pico-turbine.

14. Réseau d'eau selon l'une quelconque des revendications 12 à 13, **caractérisé en ce que** la pale de forme sensiblement annulaire (151) de la pico-turbine comporte un rayon extérieur supérieur à au moins 2/3 d'un rayon intérieur de la canalisation.

15. Réseau d'eau selon l'une quelconque des revendications 12 à 14, **caractérisé en ce que** l'installation hydraulique (100) est installée dans un regard de visite (12) dudit réseau, sur une canalisation existante.

## Patentansprüche

1. Wasserkraftanlage (100) zur Erzeugung von elektrischer Energie aus einem Wasserstrom, der in einem Wassernetz (10) fließt, umfassend:
- mindestens eine Pico-Turbine (150) mit transversaler Strömung, die auf einer Welle (155) montiert ist, die sich senkrecht zu einer Richtung des Wasserstroms erstreckt, wobei die Pico-Turbine eine Vielzahl von kreisbogenförmigen Schaufelblättern (151) umfasst, die mit einem oder mehreren Abschnitten einer Kugel, die in dem Wasserstrom installiert ist, in Verbindung stehen, um eine mechanische Rotationsenergie zu erzeugen,
- mindestens eine Generatoreinheit (120), die außerhalb des Wasserstroms installiert und mit der Welle (155) der Pico-Turbine gekoppelt ist, um die mechanische Rotationsenergie in elektrische Energie umzuwandeln,
**dadurch gekennzeichnet, dass** die Wasserkraftanlage außerdem Folgendes umfasst:
- mindestens eine Mess- und Steuereinheit (160), die außerhalb des Wasserstroms installiert ist, mit der Generatoreinheit (120) verbunden ist, die Verteilung der gesammelten elektrischen Energie steuert und den Betriebspunkt der Pico-Turbine (150) in Abhängigkeit von der Durchflussmenge des Wasserstroms steuert.

2. Wasserkraftanlage nach Anspruch 1, **dadurch gekennzeichnet, dass** sie eine Messeinheit umfasst, die indirekt ein Maß für den Durchfluss des Wasserstroms bestimmt.

3. Wasserkraftanlage nach einem der Ansprüche 1 bis 2, **dadurch gekennzeichnet, dass** das im Wesentlichen ringförmige Schaufelblatt (151) einen Querschnitt in Form eines Flügelprofils aufweist.

4. Wasserkraftanlage nach einem der Ansprüche 1 bis 3, **dadurch gekennzeichnet, dass** das im Wesentlichen ringförmige Schaufelblatt (151) zwei kreisbogenförmige Blätter (151a, 151b) mit gleichem Radius aufweist, die durch Stumpfstoßtechnik verbunden sind.

5. Wasserkraftanlage nach Anspruch 4, **dadurch gekennzeichnet, dass** die Welle (155) der Pico-Turbine an einem einzigen Punkt des ringförmigen Schaufelblatts (151) an einer Verbindung zwischen den Enden der beiden kreisbogenförmigen Schaufelblätter (151a, 151b) angebracht ist.

6. Wasserkraftanlage nach einem der Ansprüche 1 bis 5, **dadurch gekennzeichnet, dass** sie einen adaptiven Sockel (130) umfasst, der außerhalb des Wasserstroms installiert und geeignet ist, einerseits die Welle (155) der Pico-Turbine radial zur Richtung des Wasserstroms zu halten und andererseits die Mess- und Steuereinheit (160) sowie die Generatoreinheit (120) zu tragen.

7. Wasserkraftanlage nach Anspruch 6, **dadurch gekennzeichnet, dass** sie mindestens einen Messsensor aufweist, der in dem adaptiven Sockel (130) montiert ist.

8. Wasserkraftanlage nach einem der Ansprüche 1 bis 7, **dadurch gekennzeichnet, dass** die Generatoreinheit (120) einen bürstenlosen Gleichstromgenerator umfasst, der mit einem Mikrocontroller verbunden ist.

9. Wasserkraftanlage nach einem der Ansprüche 1 bis 8, **dadurch gekennzeichnet, dass** die Steuereinheit (160) ein Telekommunikationsmodul umfasst, das zum Datenaustausch mit einem entfernten Verarbeitungssystem geeignet ist.

10. Wasserkraftanlage nach einem der Ansprüche 6 bis 9, **dadurch gekennzeichnet, dass** sie eine Vorrichtung zur Speicherung des erzeugten Stroms umfasst.

11. Wasserkraftanlage nach einem der Ansprüche 1 bis 10, **dadurch gekennzeichnet, dass** sie ein wasserdichtes Gehäuse (110) umfasst, in dem zumindest die Generatoreinheit (120) und die Steuereinheit (160) untergebracht sind.

12. Wassernetz (10) mit einer Vielzahl von Rohrleitungen (13), die so miteinander verbunden sind, dass sie ein Rohrnetz bilden, in dem ein Wasserstrom fließt,
**dadurch gekennzeichnet, dass** es mindestens eine Wasserkraftanlage (100) nach einem der Ansprüche 1 bis 11 umfasst, die in mindestens einer der Rohrleitungen des Rohrleitungsnetzes montiert ist, wobei die Pico-Turbine (150) im Inneren der Rohrleitung (13) und die Generatoreinheit (120) und die Steuereinheit (160) außerhalb der Rohrleitung untergebracht sind.

13. Wassernetz nach Anspruch 12, **dadurch gekennzeichnet, dass** die Rohrleitung (13) eine Durchgangsöffnung (15) aufweist, deren Abmessungen an die Außenabmessungen der Pico-Turbine angepasst sind, so dass der Durchgang des im Wesentlichen ringförmigen Schaufelblatts im Inneren der Rohrleitung möglich ist, wobei die Durchgangsöffnung von der Welle (155) der Pico-Turbine durchquert werden kann.

14. Wassernetz nach einem der Ansprüche 12 bis 13, **dadurch gekennzeichnet, dass** das im Wesentlichen ringförmige Schaufelblatt (151) der Pico-Turbine einen Außenradius aufweist, der größer als mindestens 2/3 eines Innenradius der Rohrleitung ist.

15. Wassernetz nach einem der Ansprüche 12 bis 14, **dadurch gekennzeichnet, dass** die Wasserkraftanlage (100) in einem Kontrollschacht (12) des Netzes an einer bestehenden Rohrleitung installiert wird.

## Claims

1. Hydraulic system (100) for generating electrical energy from a water stream circulating in a hydraulic network (10), including:
- at least one cross flow pico-turbine (150) mounted to a shaft (155) extending perpendicularly to a direction of said water stream, said pico-turbine including a plurality of circular arc blades (151) that are inscribed in one or more cross-sections of a sphere, installed in the water stream to generate mechanical rotational energy,
- at least one generator unit (120), installed out of the water stream and coupled with the shaft (155) of the pico-turbine to transform the mechanical rotational energy into electrical energy,
**characterised in that** the hydraulic system further includes at least one control unit (160), installed out of the water stream, connected to the generator unit (120), controlling distribution of the electrical energy collected and driving the operating point of the pico-turbine (150) as a function of the flow rate of the water stream.

2. Hydraulic system according to claim 1, **characterised in that** it includes a measurement unit indirectly determining a measurement of the flow rate of the water stream.

3. Hydraulic system according to any of claims 1 to 2, **characterised in that** the substantially annular shaped blade (151) has a cross-section in the form of a wing profile.

4. The hydraulic system according to any of claims 1 to 3, **characterised in that** the substantially annular shaped blade (151) includes two circular arc blades (151a, 151b), having the same radius, mounted end to end.

5. Hydraulic system according to claim 4, **characterised in that** the shaft (155) of the pico-turbine is mounted at a single point of the annular blade (151), at a junction between the ends of the two circular arc blades (151a, 151b).

6. Hydraulic system according to any of claims 1 to 5, **characterised in that** it includes an adaptive base plate (130), installed out of the water stream and capable, on the one hand, of keeping the shaft (155) of the pico-turbine radial with respect to the direction of the water stream and, on the other hand, of supporting the measurement and control unit (160) as well as the generator unit (120).

7. Hydraulic system according to claim 6, **characterised in that** it includes at least one measurement sensor mounted in the adaptive base plate (130).

8. Hydraulic system according to any of claims 1 to 7, **characterised in that** the generator unit (120) includes a brushless DC generator connected to a microcontroller.

9. Hydraulic system according to any of claims 1 to 8, **characterised in that** the control unit (160) includes a telecommunication module capable of exchanging data with a remote processing system.

10. Hydraulic system according to any of claims 6 to 9, **characterised in that** it includes a device for storing electric power produced.

11. Hydraulic system according to any of claims 1 to 10, **characterised in that** it includes a sealed casing (110) in which at least the generator unit (120) and the control unit (160) are housed.

12. Water network (10) including a plurality of pipes (13) connected to each other so as to form a pipe network in which a water stream circulates, **characterised in that** it includes at least one hydraulic system (100) according to any of claims 1 to 11, mounted in at least one of the pipes of the pipe network, the pico-turbine (150) being housed inside the pipe (13) and the generator unit (120) and control unit (160) being housed outside said pipe.

13. Water network according to claim 12, **characterised in that** the pipe (13) includes a flow-through opening (15), having dimensions adapted to the external dimensions of the pico-turbine so as to allow passage of the substantially annular shaped blade inside the pipe, the flow-through opening being capable of having the shaft (155) of the pico-turbine passing therethrough.

14. Water network according to any of claims 12 to 13, **characterised in that** the substantially annular shaped blade (151) of the pico-turbine includes an external radius greater than at least 2/3 of an internal radius of the pipe.

15. Water network according to any of claims 12 to 14, **characterised in that** the hydraulic system (100) is installed in a manhole (12) of said network, on an existing pipe.
